# EUROPÄISCHE PATENTANMELDUNG

(11) **EP 1 477 539 A2**
(43) Veröffentlichungstag der Anmeldung: **17.11.2004**
(21) Anmeldenummer: 04010725.2
(22) Anmeldetag: 06.05.2004
(51) Int. Cl.: C09J 5/06, H05B 3/74

(54) **Verfahren und Vorrichtung zur Befestigung eines Bauelements an einer Keramikplatte**

(30) Priorität: 12.05.2003 DE 10321386
(71) Anmelder: Diehl AKO Stiftung & Co. KG, 88239 Wangen (DE)
(72) Erfinder: Fluhrer, Henry, 75447 Sternenfels (DE)
(74) Vertreter: Diehl Patentabteilung

(57) **Zusammenfassung**

Zur Befestigung eines Bauelements an einer Keramik-, Glas- oder Glaskeramikplatte wird eine Masse verwendet, die ein Schwindungsmaß < 0,05 % aufweist und die in ausgehärtetem Zustand derart hart ist, dass mechanische Schwingungen einer Frequenz < 100 kHz zwischen dem Bauelement und der Keramik-, Glas- oder Glaskeramikplatte gekoppelt werden.

## Beschreibung

Die Erfindung betrifft die Befestigung eines Bauelements, insbesondere Ultraschallsensor und/oder Ultraschallsender und/oder elektrisches Kontaktelement, an einer Keramik-, Glas- oder Glaskeramikplatte mittels eines Klebers. Weiterhin betrifft die Erfindung eine derartige Einrichtung.

In der älteren Patentanmeldung 10215043.5-34 ist eine Einrichtung zur Zustandserfassung an einer Glaskeramikplatte beschrieben, an der ein Schallwellensender und ein Schallwellenempfänger angeordnet sind.

Üblicherweise werden Bauelemente an Kochfelder bildenden Glaskeramikplatten mittels eines Silikonklebers befestigt. Solche Silikonkleber beeinträchtigen die Bruchsicherheit der Glaskeramikplatte zwar nicht, halten jedoch nur Temperaturen von maximal 250°C stand.

Zum Nachweis der Bruchsicherheit von Glaskeramikplatten müssen diese Stoßtests von mindestens 0,5 Nm bestehen, wobei man die Glaskeramikplatte mit einem Normgewicht von 2,5 N aus 0,2 m Höhe fallen lässt.

Da die Silikonkleber weich sind, eignen sie sich nicht zur Übertragung von mechanischen Schwingungen im Frequenzbereich unter 100 kHz. Denn der zwischen der Keramikplatte und dem Ultraschallsensor und/oder Ultraschallsender liegende Silikonkleber wirkt als Dämpfungsglied für mechanische Schwingungen unter 100 kHz. Dies ist ungünstig, da das den Ultraschallsensor bzw. Ultraschallsender bildende Piezoelement bei Frequenzen von 20 kHz bis 1 MHz arbeitet.

Mittels Epoxyklebem oder Keramikklebern ließen sich auch unter 100 kHz schallübertragende Verbindungen herstellen. Allerdings haben diese Kleber den Nachteil, dass sie die Stoßfestigkeit der Keramikplatte erheblich beeinträchtigen. Versuche haben gezeigt, dass ein Bruch der Keramik-, Glas- oder Glaskeramikplatte bereits bei 0,1 Nm auftritt, wobei bei dem genannten Normgewicht von 2,5 N die Fallhöhe nur 0,04 m beträgt.

Epoxykleber oder Keramikkleber sind deshalb, obwohl sie an sich eine hinreichende Temperaturbeständigkeit haben, für die Befestigung von Piezoelementen an einer Glaskeramikplatte nicht geeignet.

Elektrische Leiterbahnen lassen sich an Glaskeramikplatten bekanntermaßen durch Aufdampfen von Metallschichten herstellen. Auch solche Metallschichten mindern die Stoßfestigkeit der Glaskeramikplatte.

Aufgabe der Erfindung ist es, eine Befestigung der eingangs genannten Art vorzuschlagen, die die Schallübertragung zwischen dem Bauelement und der Keramik-, Glas- oder Glaskeramikplatte nicht entscheidend dämpft, hohen Temperaturen, beispielsweise 350°C, standhält und die Stoßfestigkeit der Keramik-, Glas- oder Glaskeramikplatte nicht entscheidend schwächt.

Erfindungsgemäß ist obige Aufgabe durch die Merkmale des Anspruchs 1 gelöst.

Es wurde gefunden, dass das Schwindungsmaß des Klebers einen wesentlichen Einfluss auf die Stoßfestigkeit der Keramik-, Glas- oder Glaskeramikplatte hat. Dies lässt sich darauf zurückführen, dass durch die Schwindung beim Aushärten eine mechanische Spannung zwischen der Kleberschicht und der Keramik-, Glas- oder Glaskeramikplatte entsteht. Versuche haben bestätigt, dass bei einem Schwindungsmaß unter 0,05 %, insbesondere bei einem Schwindungsmaß < 0,02 %, die Stoßfestigkeit der Keramik-, Glas oder Glaskeramikplatte kaum beeinträchtigt ist. Bei Epoxyklebern und Keramikklebern ist das Schwindungsmaß höher. Es liegt zwischen 0,05 % und 0,2 %.

Untersuchungen haben ergeben, dass bevorzugt bei einer Shore-Härte D > 20, insbesondere > 60, mechanische Schwingungen auch mit einer Frequenz < 100 kHz von einem Piezoelement in die Keramik-, Glasoder Glaskeramikplatte eingekoppelt werden.

Als die Erfordernisse erfüllende und das Bauelement sicher anklebende Maße ist vorzugsweise ein, insbesondere kalthärtender, Zweikomponenten-Kunstharzkitt geeignet. Ein solcher Kunstharzkitt ist unter dem Handelsnahmen Asplit VP 788 der Fa. Hoechst/Dupont für Beschichtungen und Verfugungen im Bauwesen marktbekannt.

Weitere vorteilhafte Ausgestaltungen und eine die genannte Masse verwendende Einrichtung ergeben sich aus den weiteren Ansprüchen der folgenden Beschreibung. In der Zeichnung zeigen:
Figur 1 eine Seitenansicht einer Keramik-, Glas- oder Glaskeramikplatte mit angeklebten und mittels einer Leiterbahn verbundenen elektrischen Bauelementen,
Figur 2 eine Aufsicht der Einrichtung.

Eine Keramik-, Glas- oder Glaskeramikplatte 1 bildet beispielsweise ein Kochfeld mit mehreren in der Zeichnung nicht dargestellten Kochzonen. Als akustischer Sensor, insbesondere Ultraschallsensor, ist ein scheibenförmiges Piezoelement 2 mittels einer Masseschicht 3 an die Glaskeramikplatte 1 geklebt und akustisch gekoppelt. Das Piezoelement 2 kann Sender und/oder Empfänger sein, wobei äußere, auf die Glaskeramikplatte 1 wirkende Einflüsse, die akustischen Schwingungen beeinflussen. Die Resonanzfrequenzen solcher Piezoelemente liegen bei 20 kHz bis 1 MHz.

Die Masseschicht 3 ist von einem kalthärtenden Zweikomponenten-Kunstharzkitt, speziell Asplit VP 788, gebildet, der Furanharz und Kohlenstoffmehl als Füllstoff enthält.

Die Masse wird in teigigem Zustand auf die Glaskeramikplatte 1 aufgetragen und das Piezoelement 2 wird aufgesetzt. Das Schwindungsmaß der Masse beträgt beim Aushärten höchstens 0,02 %. Aufgrund dieser geringen Schwindung ergeben sich kaum mechanische Spannungen zwischen der Glaskeramikplatte 1 und der ausgehärteten Masseschicht 3. Versuche haben eine Stoßfestigkeit von 1,5 Nm mit einem Normgewicht von 2,5 N und einer Fallhöhe von 0,6 m ergeben, also das Dreifache des eingangs genannten geforderten Mindestwertes. Im ausgehärteten Zustand ist die Masseschicht 3 so hart, dass sie akustische Schwingungen auch unter 100 kHz zwischen dem Piezoelement 2 und der Glaskeramikplatte 1 überträgt. Die Schallübertragung ist damit im gesamten Frequenzbereich des Piezoelements gewährleistet. Messungen haben eine Shore-Härte D > 60 der Masseschicht 3 ergeben.

Die Masseschicht 3 hält Temperaturen bis 350°C stand, was auch bei Kochfeldern ausreichend ist.

Aus der gleichen Masse besteht eine Masseschicht 4, mit der ein elektrisches Kontaktelement 5, insbesondere Steckkontakt, an die Glaskeramikplatte 1 angeklebt ist. Mit der Masse lassen sich auch andere mechanische oder elektrische Bauelemente ankleben.

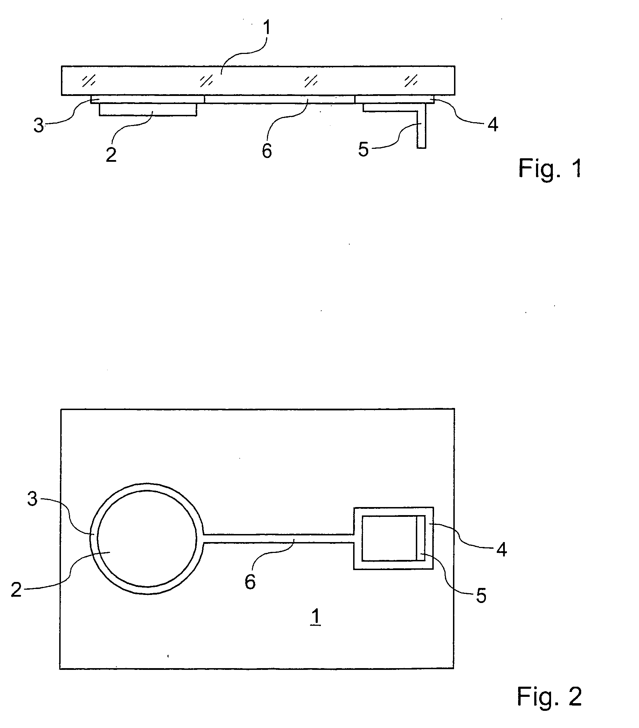

Die Masse ist aufgrund des Kohlenstoffmehls elektrisch leitfähig. Es hat sich ergeben, dass der spezifische elektrische Widerstand kleiner als 100 kΩ·mm²/m ist. Die Masse eignet sich somit auch zur Gestaltung von elektrischen Leiterbahnen. In den Figuren 1 und 2 ist eine solche auf die Glaskeramikplatte 1 aufgebrachte Leiterbahn 6 dargestellt, die zwischen der Masseschicht 3 und der Masseschicht 4 verläuft. Damit ist eine Kontaktseite des Piezoelements 2 mit dem Kontaktelement 5 elektrisch leitend verbunden. Aufgrund des genannten, geringen Schwindungsmaßes beim Aushärten führt auch die Leiterbahn 6 nicht zu einer entscheidenden Verringerung der Stoßfestigkeit der Glaskeramikplatte 1.

## Patentansprüche

1. Befestigung eines Bauelements, insbesondere Ultraschallsensor und/oder Ultraschallsender und/oder elektrisches Kontaktelement, an einer Keramik-, Glas- oder Glaskeramikplatte mittels eines Klebers,
**dadurch gekennzeichnet,**
**dass** als Kleber eine Masse verwendet wird, die ein Schwindungsmaß < 0,05% aufweist und die in ausgehärtetem Zustand derart hart wird, dass mechanische Schwingungen einer Frequenz < 100 kHz zwischen dem Bauelement und der Keramik-, Glas- oder Glaskeramikplatte gekoppelt werden.

2. Befestigung nach Anspruch 1,
**dadurch gekennzeichnet,**
**dass** das Schwindungsmaß ≤ 0,02% ist.

3. Befestigung nach Anspruch 1,
**dadurch gekennzeichnet,**
**dass** die ausgehärtete Masse eine Shore-Härte D > 20, insbesondere > 60, hat.

4. Befestigung nach einem der vorhergehenden Ansprüche,
**dadurch gekennzeichnet,**
**dass** die Masse ein, insbesondere kalthärtender, Zweikomponenten-Kunstharzkitt ist.

5. Befestigung nach einem der vorhergehenden Ansprüche,
**dadurch gekennzeichnet,**
**dass** die Masse ein Furanharz mit Kohlenstoffmehl als Füllstoff ist.

6. Befestigung nach einem der vorhergehenden Ansprüche,
**dadurch gekennzeichnet,**
**dass** der spezifische elektrische Widerstand der ausgehärteten Masse kleiner als 100 kΩ·mm²/m ist.

7. Einrichtung mit einer Masse nach einem der vorhergehenden Ansprüche,
**dadurch gekennzeichnet,**
**dass** die Masse eine Masseschicht (3) bildet, mittels der wenigstens ein mechanisches oder elektrisches Bauelement, insbesondere ein scheibenförmiges Piezoelement (2), an die Keramik-, Glas- oder Glaskeramikplatte (1) geklebt ist.

8. Einrichtung nach Anspruch 7,
**dadurch gekennzeichnet,**
**dass** die Masse als elektrische Leiterbahn (6) gestaltet ist.

9. Einrichtung nach Anspruch 7,
**dadurch gekennzeichnet,**
**dass** mittels der Masse wenigstens ein Piezoelement (2) und wenigstens ein elektrisches Kontaktelement (5) an die Keramik-, Glas- oder Glaskeramikplatte (1) angeklebt ist und die Masse eine das Piezoelement (2) und das Kontaktelement (5)verbindende Leiterbahn (6) bildet.
